# EUROPEAN PATENT SPECIFICATION

(11) **EP 1 786 270 B1**
(45) Date of publication and mention of the grant of the patent: **26.03.2014**
(21) Application number: 05772325.6
(22) Date of filing: 18.07.2005
(51) Int. Cl.: A23G 9/14, A23G 9/16, A23G 9/20, A23C 3/00

(54) **SYSTEM AND METHOD FOR MANUFACTURING FROZEN EDIBLE PRODUCTS**
SYSTEM UND VERFAHREN ZUR HERSTELLUNG VON GEFRORENEN ESSBAREN PRODUKTEN
SYSTEME ET PROCEDE DE FABRICATION DE PRODUITS COMESTIBLES CONGELES

(30) Priority: 30.07.2004 US 903021
(43) Date of publication of application: 23.05.2007
(73) Proprietor: Alliance Food Equipment Processing, LLC, Northvale, NJ 07647 (US)
(72) Inventor: WHITE, Neal E., Northvale, NJ 07647 (US); CASHION, Kenneth W. Jr., West Chester, PA 19380 (US)
(74) Representative: Kopf, Korbinian Paul
(86) International application number: PCT/US2005/025401
(87) International publication number: WO 2006/020202

(56) References cited:
- EP-A2- 0 322 952
- US-A- 2 975 617
- US-A- 3 800 036
- US-A- 5 615 559
- US-A- 5 692 392

## Description

### CROSS-REFERENCE TO RELATED APPLICATIONS

This application claims the priority and benefit of the filing date of United States Patent Application No. 10/903,021, publication number US 2006/0024418 A1, titled SYSTEM AND METHOD FOR MANUFACTURING FROZEN EDIBLE PRODUCTS, filed July 30, 2004.

### FIELD OF INVENTION

The present invention relates to a system and method for manufacturing frozen edible products, for example, sherbets, frozen yogurts, ice cream and other frozen dairy products and, in particular, to a system and method for manufacturing frozen edible products having a low fat content.

### BACKGROUND OF THE INVENTION

The manufacture of frozen edible products, such as sherbets, frozen yogurts, ice cream and other frozen dairy products, typically involves, as a first step, the preparation of a mix of ingredients. With respect to ice cream, these ingredients typically comprise: between 10% and 16% milk fat; between 9% and 12% non-fat milk solids, also known as serum solids, containing proteins (caseins and whey proteins) and carbohydrates (lactose) found in milk; between 12% and 16% sweeteners (usually a combination of sucrose and glucose-based corn syrup sweeteners); stabilizers; emulsifiers; and between 55% and 64% water which comes from the milk and other ingredients. These ingredients are pasteurized, homogenized and aged for between four and twenty-four hours. Aging provides time for the fat in the mix to cool and crystallize following pasteurization and for the proteins and polysaccharides to fully hydrate. Following aging, liquid flavors, fruit purees and colors, if any, are added to the mix, and the mix is placed in a holding tank to await transmission through a freezing process.

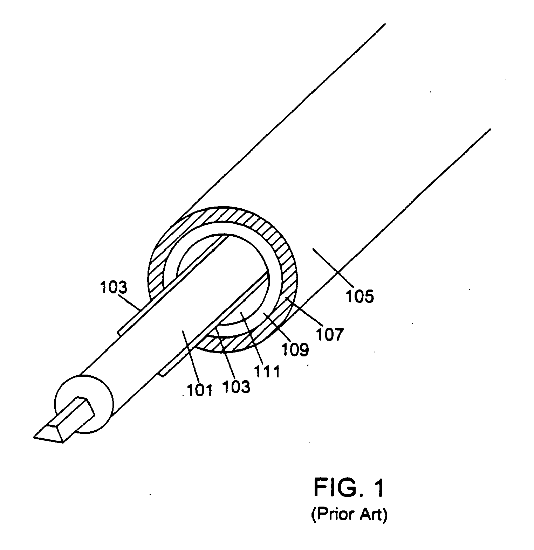

The freezing process freezes a portion of the water in the mix and whips air into the mix. A continuous-process freezer typically is used, such as that shown in FIG. 1, for freezing the mix. The continuous-process freezer includes a dasher 101 for churning the mix during freezing and scraper blades 103 for scraping the mix from the internal cylindrical wall of freezing cylinder 109. Freezing cylinder 109 is encased within outer jacket 105. Refrigerant layer 107 is located between outer jacket 105 and freezing cylinder 109. The refrigerant layer contains a refrigerant such as ammonia or freon. The mix is continuously pumped into one end of the freezer and pumped out of the freezer's opposite end at a temperature of about 22°F with about 50% of the water in the mix freezing during the process. The product mix freezes in an area 111 adjacent to the internal wall of freezing cylinder 109.

The partially frozen mix then is transmitted to a further manufacturing station, for example, a packaging filler, a mold filler or an extrusion system. In the alternative, an intermediary manufacturing station may be included before the filler or extrusion system, for example, an ingredient feeder for adding ingredients to the partially frozen mix. The partially frozen mix from the filler or extrusion system then is passed through a blast freezer operating at between -30°C and -40°C where most of the remaining water in the mix is frozen. Below about -25°C, ice cream is stable for an indefinite period without danger of existing ice crystals enlarging or new ice crystals forming. The enlargement of existing ice crystals or the formation of new ice crystals degrades ice cream and limits its shelf life.

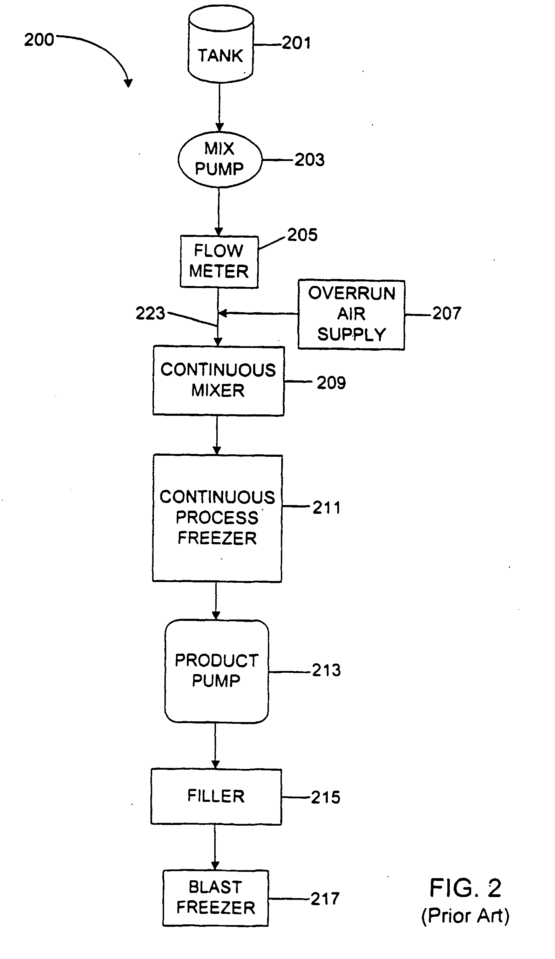

A prior-art system 200 for manufacturing ice cream is shown in FIG. 2. Tank 201 holds product mix that has been pasteurized, homogenized and aged. Mix pump 203 pumps the product mix through flow meter 205 and into continuous mixer 209. Flow meter 205 measures the flow of product mix through system 200. Pressurized air from overrun air supply 207 is mixed with the product mix within conduit 223. This conduit transmits the mix and pressurized air into continuous mixer 209 (also known as a pre-aeration mixer).

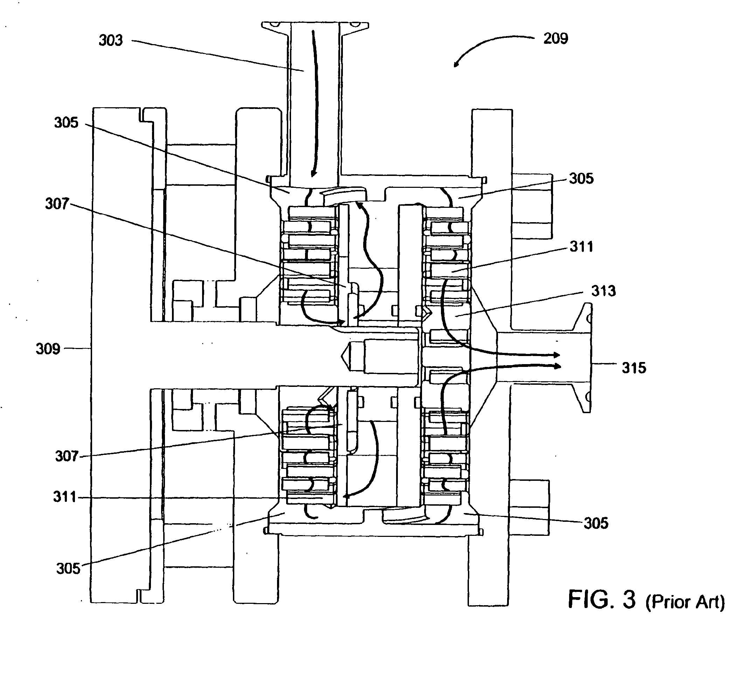

Continuous mixer 209, shown in cross-sectional view in FIG. 3, mechanically shears the air and product mix to create an emulsion of these components. Continuous mixer 209 contains a multi-vaned impeller 311 driven by variable drive motor 309 that propels the product mix and air entering from inlet 303 through a plurality of sheer areas 305 and suction ports 307 several times during the passage of these components through the mixer and out outlet port 315. A continuous mixer for this purpose, called a C-R (continuous recirculation) mixer, is sold by the assignee of the present application, Alliance Food Equipment and Processing, LLC, doing business under the name WCB Ice Cream.

The emulsion of product mix and overrun air is transmitted from continuous mixer 209 to continuous-process freezer 211 in which a portion of the water in the mix is rapidly frozen. Product pump 213 pumps the partially frozen emulsion of product mix and air from continuous-process freezer 211 into filler 215 where the partially frozen emulsion is packaged in containers or directed into molds. In place of a filler, an extrusion system can be employed. Also, further manufacturing stations may be disposed before the filler or extrusion system, for example, an ingredient feeder. The partially frozen emulsion then is transmitted from the filler or extrusion system to blast freezer 217 where most of the remaining water in the product is frozen.

The quality of ice cream depends upon numerous factors. For example, a portion of ice cream must constitute air. In fact, air constitutes up to half of the volume of most ice creams. The percentage of air in ice cream is termed the product's overrun. Without overrun, ice cream would be similar to a frozen ice cube. Quality ice cream has an even mixture of small-sized entrapped air cells. Quality ice cream also has an even mixture of small-sized ice crystals and fat globules. In general, smaller ice crystals provide a richer, smoother and creamier texture to the ice cream. Small ice crystals are produced by freezing the mix rapidly to a low temperature in the continuous-process freezer.

Recently, ice cream manufacturers have begun producing ice cream using mixes having a lower percentage of milk fat, for example, between 5% and 10%, in order to produce a product having less calories. In order to provide such ice cream with a texture and creaminess similar to that of ice cream produced using mixes having a normal percentage of milk fat, a so-called "slow churning" process (also called a "cold extrusion" process) has been employed as an additional step in the manufacturing process described above in connection with FIG. 2. This step of slow churning follows freezing of the ice cream in the continuous-process freezer. The slow churning step tends to flocculate and partially coalesce the fat globules in the ice cream. This flocculation and partial coalescence causes the ice cream to have a texture and creaminess similar to that of ice cream having a higher percentage of milk fat. However, the slow churning process slows the manufacturing process and increases the cost of manufacturing the ice cream.

US 5 692 392 discloses a soft frozen beverage dispenser apparatus and method. US 2 975 617 discloses an aerating and refrigerating apparatus. EP 0 322 952 discloses a confection and method and apparatus for manufacturing it.

### SUMMARY OF THE INVENTION

We have discovered that a relatively inexpensive modification to the conventional process for manufacturing frozen edible products, such as sherbets, frozen yogurts, ice cream and other frozen dairy products, results in products produced from low fat mixes having essentially the same enhanced creaminess and texture as frozen edible products produced using the slow churning process. These low fat mixes have preferably between 5% and 10% milk fat and, more preferably, between 6% and 7% milk fat. This modified method does not result in any increase in the time or cost of manufacture.

In one aspect, the present invention provides a method for manufacturing a frozen edible product on a manufacturing system having a plurality of manufacturing stations as defined in independent claims 1 and 2 . The manufacturing stations include a continuous mixer and a freezer. The method includes providing a supply of compressed air, preparing a mix of ingredients for the product and directing the mix and the compressed air into the continuous mixer. The method further includes creating an emulsion of the mix and compressed air in the continuous mixer and directing the emulsion into the freezer. The method also includes partially freezing the emulsion in the freezer, and transmitting a first portion of the partially frozen emulsion from the freezer back into the continuous mixer and a second portion of the partially frozen emulsion to a further one of the manufacturing stations. In an alternative embodiment, the method includes transmitting the second portion of the frozen emulsion back into the freezer.

The frozen edible product preferably is a frozen dairy product such as ice cream. The ice cream preferably is low fat ice cream having between 5% and 10% milk fat and, more preferably, between 6% and 7% milk fat. In addition, the freezer preferably is a continuous-process freezer having a dasher. The method preferably further includes controlling the speed of the dasher using a variable frequency inverter drive. The further manufacturing station may be, for example, a packaging filler, a mold filler, an extrusion system or an ingredient feeder. In addition, the method preferably also includes providing a first pump and a second pump, pumping with the first pump the first portion of the frozen emulsion to the continuous mixer and pumping with the second pump the second portion of the frozen emulsion to the further manufacturing station. In the alternative, the method preferably also includes providing a pump and a diverting valve, pumping with the pump the partially frozen emulsion through the diverting valve and diverting with the diverting valve the first portion of the partially frozen emulsion to the continuous mixer and the second portion of the partially frozen emulsion to the further manufacturing station.

In another aspect, the present invention provides a system for manufacturing a frozen edible product as defined in independent claims 17 and 18 . The system includes a continuous mixer for receiving a mix of ingredients for the product and compressed air and for creating an emulsion of the mix and compressed air. In addition, the system includes a freezer for partially freezing the emulsion. The system further includes at least one pump for pumping a first portion of the partially frozen emulsion back into the continuous mixer and a second portion of the partially frozen emulsion to a further manufacturing station of the system. In an alternative embodiment, the system further includes at least one pump for pumping a portion of the partially frozen emulsion back into the freezer.

### BRIEF DESCRIPTION OF THE DRAWINGS

FIG. 1 is a perspective view of a prior-art continuous-process freezer.
FIG. 2 is a schematic diagram of a prior-art system for manufacturing frozen edible products.
FIG. 3 is a cross-sectional view of a prior-art continuous mixer.
FIG. 4 is a schematic diagram of a system for manufacturing frozen edible products in accordance with the present invention.
FIG. 5 is a schematic diagram of an alternative system for manufacturing frozen edible products in accordance with the present invention.

### DETAILED DESCRIPTION OF THE PREFERRED EMBODIMENTS

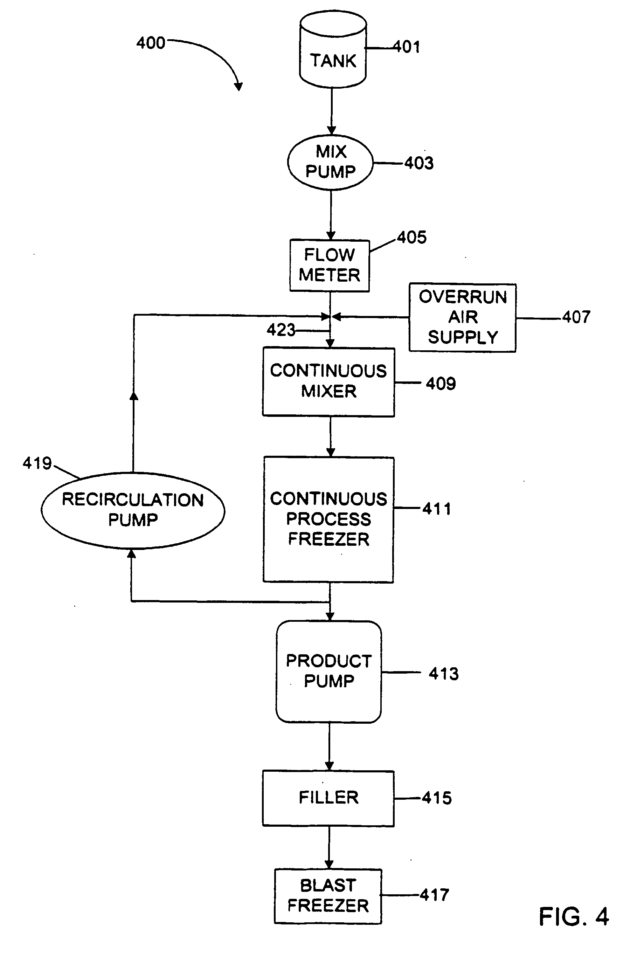

A system 400 for manufacturing frozen edible products, such as sherbets, frozen yogurts, ice cream and other frozen dairy products, in accordance with the present invention is shown in FIG. 4. The structure of tank 401, mix pump 403, flow meter 405, overrun air supply 407, continuous mixer 409, continuous-process freezer 411, product pump 413, filler 415 and blast freezer 417 of system 400 are the same as, respectively, tank 201, mix pump 203, flow meter 205, overrun air supply 207, continuous mixer 209, continuous-process freezer 211, product pump 213, filler 215 and blast freezer 217 of system 200.

System 400, however, includes recirculation pump 419. During manufacture of the products, recirculation pump 419 continuously pumps a portion of the partially frozen emulsion transmitted from continuous-process freezer 411 into conduit 423 which transmits this partially frozen emulsion into continuous mixer 409. As a result, a combination of partially frozen emulsion from continuous-process freezer 411, pressurized air from overrun air supply 407 and product mix from tank 401 is continuously transmitted into continuous mixer 409 during the manufacturing process. The proportion of partially frozen emulsion recirculated back into continuous mixer 409 is adjusted by adjusting the pumping power of recirculation pump 419 in relation to that of product pump 413. In the alternative, a single pump with a diverting valve that simultaneously diverts a first portion of the partially frozen emulsion back into continuous mixer 409 and a second portion of the partially frozen emulsion to filler 415, or another manufacturing station such as an ingredient feeder or extrusion system, can be used for this purpose.

Continuous mixer 409 mechanically shears the air, product mix and partially frozen product to create an emulsion of these components. The recirculation of a portion of the partially frozen emulsion back into continuous mixer 409 causes some flocculation and partial coalescence of the fat globules within the emulsion produced by continuous mixer 409. As a result, less churning of the emulsion is required within continuous-process freezer 411, and the dasher within continuous-process freezer 411 can be run at a slower speed. A variable frequency inverter drives this dasher at an optimum speed.

Operating the dasher within the continuous-process freezer at a slower speed generates less heat within the continuous-process freezer and enables the continuous-process freezer to operate more efficiently and at a lower temperature. In addition, since the recirculated partially frozen emulsion remains partially frozen during transmission through continuous mixer 409, the emulsion transmitted from continuous mixer 409 enters continuous-freezer 411 at a lower temperature. The recirculated partially frozen emulsion also seeds and accelerates the freezing process within continuous-process freezer 411. The final product pumped from the continuous-process freezer, therefore, is at a substantially lower temperature than that produced using conventional processes.

As a result of the enhanced flocculation and partial coalescence of the fat globules within the continuous mixer, the reduced temperature of the emulsion entering the continuous-process freezer, the accelerated freezing of the emulsion within the continuous-process freezer and the lower operating temperature of the continuous-process freezer, the final product pumped from the continuous-process freezer has an enhanced texture, smoothness and creaminess. For frozen edible products produced from low fat mixes having, for example, between 5% and 10% milk fat and, more preferably, between 6% and 7% milk fat, the final product is similar to that of low fat ice cream produced using the extra time-consuming and expensive step of slow churning.

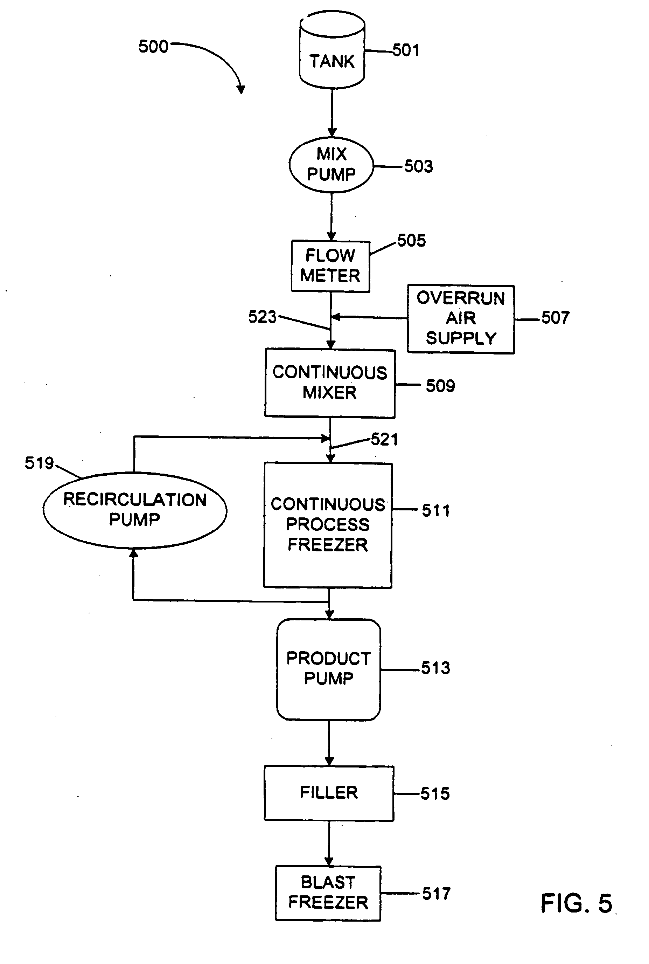

An alternative embodiment in accordance with the present invention shown in FIG. 5. The structure of tank 501, mix pump 503, flow meter 505, overrun air supply 507, continuous mixer 509, continuous-process freezer 511, recirculation pump 519, product pump 513, filler 515 and blast freezer 517 of system 500 are the same as, respectively, tank 401, mix pump 403, flow meter 405, overrun air supply 407, continuous mixer 409, continuous-process freezer 411, recirculation pump 419, product pump 413, filler 415 and blast freezer 417 of system 400. Recirculation pump 519, however, continuously pumps during the manufacturing process a portion of the partially frozen product transmitted from continuous-process freezer 511 into conduit 521 rather than conduit 523. The recirculated partially frozen product from recirculation pump 519 and the emulsion from continuous mixer 509, therefore, are mixed during the transmission of these components into and through continuous-process freezer 511. The result of this mixing is similar to that discussed above for system 400. Also, as discussed above in connection with system 400, a single pump with a diverting valve that simultaneously diverts a first portion of the partially frozen product back into continuous-process freezer 511 and a second portion of the partially frozen product to filler 515, or another manufacturing station such as an ingredient feeder or extrusion system, can be used for this purpose.

Although this invention has been described with reference to particular embodiments, these embodiments are merely illustrative of the principles and applications of the invention. Numerous modifications may be made to the illustrative embodiments, and other arrangements may be devised without departing from scope of the invention as defined by the appended claims.

### INDUSTRIAL APPLICABILITY

The present invention has applicability in the field of manufacturing of frozen edible products.

## Claims

1. A method for manufacturing a frozen edible product on a manufacturing system having a plurality of manufacturing stations, the manufacturing stations including a continuous mixer (409) and a freezer (411), the method comprising: preparing a mix of ingredients for the product; providing a continuous supply of compressed air from an air supply (407); continuously directing the mix and the compressed air through a first conduit (423) into the continuous mixer (409); creating an emulsion of the mix and the compressed air in the continuous mixer (409); directing the emulsion from the continuous mixer (409) into the freezer (411), wherein the continuous mixer (409) is connected by a second conduit to the freezer; partially freezing the emulsion in the freezer (411); and providing at least one pump to continuously and simultaneously transmit both a first portion of the partially frozen emulsion from the freezer (411) back into the first conduit (423), wherein the first portion of the partially frozen emulsion is recirculated and combines with the mix and compressed air in the first conduit (423) which is continuously directed into the continuous mixer (409), and a second portion of the partially frozen emulsion to a further one of the manufacturing stations.

2. A method for manufacturing a frozen edible product on a manufacturing system having a plurality of manufacturing stations, the manufacturing stations including a continuous mixer (509) and a freezer (511), the method comprising: preparing a mix of ingredients for the product; providing a continuous supply of compressed air from a air supply (507); continuously directing the mix and the compressed air through a first conduit (523) into the continuous mixer (509); creating an emulsion of the mix and the compressed air in the continuous mixer (509); directing the emulsion from the continuous mixer into the freezer (511) wherein the continuous mixer (509) is connected by a second conduit (521) to the freezer; partially freezing the emulsion in the freezer (511); and providing at least one pump to simultaneously continuously transmit both a first portion of the partially frozen emulsion from the freezer back into the second conduit (523), wherein the first portion of the partially frozen emulsion from the freezer (511) and the emulsion from the mixer (509) mix during the transmission of these components into the second conduit (523) and through the freezer (511), and a second portion of the partially frozen emulsion to a further one of the manufacturing stations.

3. A method for manufacturing a frozen edible product as in claim 1 or 2, wherein the frozen edible product is a frozen dairy product.

4. A method for manufacturing a frozen edible product as in claim 3, wherein the frozen dairy product is ice cream.

5. A method for manufacturing a frozen edible product as in claim 4, wherein the ice cream is low fat ice cream.

6. A method for manufacturing a frozen edible product as in claim 5, wherein the low fat ice cream comprises between 5% and 10% milk fat.

7. A method for manufacturing a frozen edible product as in claim 6, wherein the low fat ice cream comprises between 6% and 7% milk fat.

8. A method for manufacturing a frozen edible product as in claim 1 or 2, wherein the freezer is a continuous-process freezer.

9. A method for manufacturing a frozen edible product as in claim 8, wherein the continuous-process freezer comprises a dasher and a variable frequency inverter, and further comprising driving the dasher at a selected speed using the variable frequency inverter.

10. A method for manufacturing a frozen edible product as in claim 1 or 2, wherein the further manufacturing station is a filler.

11. A method for manufacturing a frozen edible product as in claim 1 or 2, wherein the further manufacturing station is an ingredient feeder.

12. A method for manufacturing a frozen edible product as in claim 1 or 2, wherein the further manufacturing station is an extrusion system.

13. A method for manufacturing a frozen edible product as in claim 1, further comprising: providing a first pump and a second pump; pumping with the first pump the first portion of the partially frozen emulsion to the continuous mixer; and simultaneously pumping with the second pump the second portion of the partially frozen emulsion to the further manufacturing station.

14. A method for manufacturing a frozen edible product as in claim 1, further comprising: providing a pump and a diverting valve; pumping with the pump the partially frozen emulsion through the diverting valve; diverting with the diverting valve the first portion of the partially frozen emulsion to the continuous mixer and the second portion of the partially frozen emulsion to the further manufacturing station.

15. A method for manufacturing a frozen edible product as in claim 2, further comprising: providing a first pump and a second pump; pumping with the first pump the first portion of the partially frozen emulsion to the freezer; and pumping with the second pump the second portion of the partially frozen emulsion to the further manufacturing station.

16. A method for manufacturing a frozen edible product as in claim 2, further comprising: providing a pump and a diverting valve, pumping with the pump the partially frozen emulsion through the diverting valve, diverting with the diverting valve the first portion of the partially frozen emulsion to the freezer and the second portion of the partially frozen emulsion to the further manufacturing station.

17. A system for manufacturing a frozen edible product comprising: a continuous mixer (409) for receiving a mix of ingredients for the product and compressed air from a source (401, 403) via a first conduit (423) for the mix and a source (407) for the compressed air, and for creating an emulsion of the mix and compressed air; a freezer (411) for partially freezing the emulsion wherein the continuous mixer (409) is connected by a second conduit to the freezer (411); and at least one pump (419) for continuously and simultaneously pumping both a first portion of the partially frozen emulsion from the freezer (411) back into the first conduit (423) wherein the first portion combines with the mix and compressed air which is continuously received within the continuous mixer to develop an increasingly even mixture, and a second portion of the partially frozen emulsion to a further manufacturing station of the system.

18. A system for manufacturing a frozen edible product comprising: a continuous mixer (509) for receiving a mix of ingredients for the product and compressed air, from a source (501, 503) via a first conduit (523) for the mix and a source (507) for the compressed air, and for creating an emulsion of the mix and compressed air; a freezer (511) for partially freezing the emulsion, wherein the continuous mixer (509) is connected by a second conduit (521) to the freezer (511); and at least one pump (519) for simultaneously continuously pumping both a first portion of the partially frozen emulsion back into the second conduit (523), wherein the first portion of the partially frozen emulsion from the freezer (511) and the emulsion from the mixer (509) mix during the transmission of these components into and through the freezer (511), and a second portion of the partially frozen emulsion to a further manufacturing station of the system.

19. A system for manufacturing a frozen edible product as in claim 17 or 18, wherein the frozen edible product is a frozen dairy product.

20. A system for manufacturing a frozen edible product as in claim 19, wherein the frozen dairy product is ice cream.

21. A system for manufacturing a frozen edible product as in claim 20, wherein the ice cream is low fat ice cream.

22. A system for manufacturing a frozen edible product as in claim 21, wherein the low fat ice cream comprises between 5% and 10% milk fat.

23. A system for manufacturing a frozen edible product as in claim 22, wherein the low fat ice cream comprises between 6% and 7% milk fat.

24. A system for manufacturing a frozen edible product as in claim 17 or 18, wherein the freezer is a continuous-process freezer.

25. A system for manufacturing a frozen edible product as in claim 24, wherein the continuous-process freezer comprises a dasher and a variable frequency inverter for driving the dasher at a selected speed.

26. A system for manufacturing a frozen edible product as in claim 17 or 18, wherein the further manufacturing station is a filler.

27. A system for manufacturing a frozen edible product as in claim 17 or 18, wherein the further manufacturing station is an ingredient feeder.

28. A system for manufacturing a frozen edible product as in claim 17 or 18, wherein the further manufacturing station is an extrusion system.

29. A system for manufacturing a frozen edible product as in claim 17, wherein the at least one pump comprises: a first pump for pumping the first portion of the partially frozen emulsion to the continuous mixer; and a second pump for simultaneously pumping the second portion of the partially frozen emulsion to the further manufacturing station.

30. A system for manufacturing a frozen edible product as in claim 17, further comprising a diverting valve for receiving the partially frozen emulsion from the at least one pump and diverting the first portion of the partially frozen emulsion to the continuous mixer and the second portion of the partially frozen emulsion to the further manufacturing station.

31. A system for manufacturing a frozen edible product as in claim 18, wherein the at least one pump comprises: a first pump for pumping the first portion of the partially frozen emulsion to the freezer; and a second pump for pumping the second portion of the partially frozen emulsion to the further manufacturing station.

32. A system for manufacturing a frozen edible product as in claim 18, further comprising a diverting valve for receiving the partially frozen emulsion from the at least one pump and diverting the first portion of the partially frozen emulsion to the freezer and the second portion of the partially frozen emulsion to the further manufacturing station.

## Patentansprüche

1. Verfahren zur Herstellung eines gefrorenen essbaren Produkts in einem Herstellungssystem, das mehrere Herstellungsstationen aufweist, wobei die Herstellungsstationen eine kontinuierliche Mischvorrichtung (409) und eine Gefriervorrichtung (411) umfassen, wobei das Verfahren Folgendes umfasst: das Präparieren einer Mischung von Zutaten für das Produkt; das Bereitstellen einer kontinuierlichen Zufuhr von Druckluft aus einer Luftzufuhr (407); das kontinuierliche Führen der Mischung und der Druckluft durch eine erste Leitung (423) in die kontinuierliche Mischvorrichtung (409); das Erzeugen einer Emulsion der Mischung und der Druckluft in der kontinuierlichen Mischvorrichtung (409); das Führen der Emulsion aus der kontinuierlichen Mischvorrichtung (409) in die Gefriervorrichtung (411), wobei die kontinuierliche Mischvorrichtung (409) durch eine zweite Leitung an die Gefriervorrichtung angeschlossen ist; das teilweise Gefrieren der Emulsion in der Gefriervorrichtung (411); und das Bereitstellen mindestens einer Pumpe zum kontinuierlichen und gleichzeitigen Übertragen sowohl eines ersten Teils der teilweise gefrorenen Emulsion aus der Gefriervorrichtung (411) zurück in die erste Leitung (423), wobei der erste Teil der teilweise gefrorenen Emulsion rückgeführt und mit der Mischung und Druckluft in der ersten Leitung (423) kombiniert wird, die kontinuierlich in die kontinuierliche Mischvorrichtung (409) geführt wird, und eines zweiten Teils der teilweise gefrorenen Emulsion zu einer weiteren der Herstellungsstationen.

2. Verfahren zur Herstellung eines gefrorenen essbaren Produkts in einem Herstellungssystem, das mehrere Herstellungsstationen aufweist, wobei die Herstellungsstationen eine kontinuierliche Mischvorrichtung (509) und eine Gefriervorrichtung (511) umfassen, wobei das Verfahren Folgendes umfasst: das Präparieren einer Mischung von Zutaten für das Produkt; das Bereitstellen einer kontinuierlichen Zufuhr von Druckluft aus einer Luftzufuhr (507); das kontinuierliche Führen der Mischung und der Druckluft durch eine erste Leitung (523) in die kontinuierliche Mischvorrichtung (509), das Erzeugen einer Emulsion der Mischung und der Druckluft in der kontinuierlichen Mischvorrichtung (509); das Führen der Emulsion aus der kontinuierlichen Mischvorrichtung in die Gefriervorrichtung (511), wobei die kontinuierliche Mischvorrichtung (509) durch eine zweite Leitung (521) an die Gefriervorrichtung angeschlossen ist; das teilweise Gefrieren der Emulsion in der Gefriervorrichtung (511); und das Bereitstellen mindestens einer Pumpe zum gleichzeitigen kontinuierlichen Übertagen sowohl eines ersten Teils der teilweise gefrorenen Emulsion aus der Gefriervorrichtung zurück in die zweite Leitung (523), wobei der erste Teil der teilweise gefrorenen Emulsion aus der Gefriervorrichtung (511) und die Emulsion aus der Mischvorrichtung (509) während des Übertragens dieser Komponenten in die zweite Leitung (523) und durch die Gefriervorrichtung (511) gemischt werden, und ein zweiter Teil der teilweise gefrorenen Emulsion zu einer weiteren der Herstellungsstationen.

3. Verfahren zur Herstellung eines gefrorenen essbaren Produkts nach Anspruch 1 oder 2, wobei das gefrorene essbare Produkt ein gefrorenes Milchprodukt ist.

4. Verfahren zur Herstellung eines gefrorenen essbaren Produkts nach Anspruch 3, wobei das gefrorene essbare Produkt Speiseeis ist.

5. Verfahren zur Herstellung eines gefrorenen essbaren Produkts nach Anspruch 4, wobei das Speiseeis fettarmes Speiseeis ist.

6. Verfahren zur Herstellung eines gefrorenen essbaren Produkts nach Anspruch 5, wobei das fettarme Speiseeis 5 % bis 10 % Milchfett umfasst.

7. Verfahren zur Herstellung eines gefrorenen essbaren Produkts nach Anspruch 6, wobei das fettarme Speiseeis 6 % bis 7 % Milchfett umfasst.

8. Verfahren zur Herstellung eines gefrorenen essbaren Produkts nach Anspruch 1 oder 2, wobei die Gefriervorrichtung eine im Kontinueverfahren arbeitende Gefriervorrichtung ist.

9. Verfahren zur Herstellung eines gefrorenen essbaren Produkts nach Anspruch 8, wobei die im Kontinueverfahren arbeitende Gefriervorrichtung einen Stößel und einen Variable-Frequenz-Umrichter umfasst und des Weiteren das Betreiben des Stößels bei variabler Geschwindigkeit unter Anwendung des Variable-Frequenz-Umrichters umfasst.

10. Verfahren zur Herstellung eines gefrorenen essbaren Produkts nach Anspruch 1 oder 2, wobei die weitere Herstellungsstation eine Füllvorrichtung ist.

11. Verfahren zur Herstellung eines gefrorenen essbaren Produkts nach Anspruch 1 oder 2, wobei die weitere Herstellungsstation ein Zutatenbeschicker ist.

12. Verfahren zur Herstellung eines gefrorenen essbaren Produkts nach Anspruch 1 oder 2, wobei die weitere Herstellungsstation ein Extrusionssystem ist.

13. Verfahren zur Herstellung eines gefrorenen essbaren Produkts nach Anspruch 1, des Weiteren Folgendes umfassend: das Bereitstellen einer ersten Pumpe und einer zweiten Pumpe; das Pumpen mit der ersten Pumpe des ersten Teils der teilweise gefrorenen Emulsion zu der kontinuierlichen Mischvorrichtung; und das gleichzeitige Pumpen mit der zweiten Pumpe des zweiten Teils der teilweise gefrorenen Emulsion zu der weiteren Herstellungsstation.

14. Verfahren zur Herstellung eines gefrorenen essbaren Produkts nach Anspruch 1, des Weiteren Folgendes umfassend: das Bereitstellen einer Pumpe und eines Verteilventils; das Pumpen mit der Pumpe der teilweise gefrorenen Emulsion durch das Verteilventil; das Verteilen mit dem Verteilventil des ersten Teils der teilweise gefrorenen Emulsion zu der kontinuierlichen Mischvorrichtung und des zweiten Teils der teilweise gefrorenen Emulsion zu der weiteren Herstellungsstation.

15. Verfahren zur Herstellung eines gefrorenen essbaren Produkts nach Anspruch 2, des Weiteren Folgendes umfassend: das Bereitstellen einer ersten Pumpe und einer zweiten Pumpe; das Pumpen mit der ersten Pumpe des ersten Teils der teilweise gefrorenen Emulsion zu der Gefriervorrichtung; und das Pumpen mit der zweiten Pumpe des zweiten Teils der teilweise gefrorenen Emulsion zu der weiteren Herstellungsstation.

16. Verfahren zur Herstellung eines gefrorenen essbaren Produkts nach Anspruch 2, des Weiteren Folgendes umfassend: das Bereitstellen einer Pumpe und eines Verteilventils; das Pumpen mit der Pumpe der teilweise gefrorenen Emulsion durch das Verteilventil; das Verteilen mit dem Verteilventil des ersten Teils der teilweise gefrorenen Emulsion zu der Gefriervorrichtung und des zweiten Teils der teilweise gefrorenen Emulsion zu der weiteren Herstellungsstation.

17. System zur Herstellung eines gefrorenen essbaren Produkts umfassend: eine kontinuierliche Mischvorrichtung (409) zum Aufnehmen einer Mischung von Zutaten für das Produkt und Druckluft aus einer Quelle (401, 403) über eine erste Leitung (423) für die Mischung und eine Quelle (407) für die Druckluft, und zum Erzeugen einer Emulsion der Mischung und Druckluft; eine Gefriervorrichtung (411) zum teilweisen Gefrieren der Emulsion, wobei die kontinuierliche Mischvorrichtung (409) durch eine zweite Leitung an die Gefriervorrichtung (411) angeschlossen ist; und mindestens eine Pumpe (419) zum kontinuierlichen und gleichzeitigen Pumpen sowohl eines ersten Teils der teilweise gefrorenen Emulsion aus der Gefriervorrichtung (411) zurück in die erste Leitung (423), wobei der erste Teil mit der Mischung und Druckluft, die kontinuierlich innerhalb der kontinuierlichen Mischvorrichtung aufgenommen wird, kombiniert wird, um eine ständig gleichmäßigere Mischung zu entwickeln, und eines zweiten Teil der teilweise gefrorenen Emulsion zu einer weiteren Herstellungsstation des Systems.

18. System zur Herstellung eines gefrorenen essbaren Produkts umfassend: eine kontinuierliche Mischvorrichtung (509) zum Aufnehmen einer Mischung von Zutaten für das Produkt und Druckluft aus einer Quelle (501, 503) über eine erste Leitung (523) für die Mischung und eine Quelle (507) für die Druckluft, und zum Erzeugen einer Emulsion der Mischung und der Druckluft; eine Gefriervorrichtung (511) zum teilweisen Gefrieren der Emulsion, wobei die kontinuierliche Mischvorrichtung (509) durch eine zweite Leitung (521) an die Gefriervorrichtung (511) angeschlossen ist; und mindestens eine Pumpe (519) zum gleichzeitigen kontinuierlichen Pumpen sowohl eines ersten Teils der teilweise gefrorenen Emulsion zurück in die zweite Leitung (523), wobei der erste Teil der teilweise gefrorenen Emulsion aus der Gefriervorrichtung (511) und die Emulsion aus der Mischvorrichtung (509) während des Übertragens dieser Komponenten in und durch die Gefriervorrichtung (511) gemischt werden, als auch eines zweiten Teils der teilweise gefrorenen Emulsion zu einer weiteren Herstellungsstation des Systems.

19. System zur Herstellung eines gefrorenen essbaren Produkts nach Anspruch 17 oder 18, wobei das gefrorene essbare Produkt ein gefrorenes Milchprodukt ist.

20. System zur Herstellung eines gefrorenen essbaren Produkts nach Anspruch 19, wobei das gefrorene essbare Produkt Speiseeis ist.

21. System zur Herstellung eines gefrorenen essbaren Produkts nach Anspruch 20, wobei das Speiseeis fettarmes Speiseeis ist.

22. System zur Herstellung eines gefrorenen essbaren Produkts nach Anspruch 21, wobei das fettarme Speiseeis 5 % bis 10 % Milchfett umfasst.

23. System zur Herstellung eines gefrorenen essbaren Produkts nach Anspruch 22, wobei das fettarme Speiseeis 6 % bis 7 % Milchfett umfasst.

24. System zur Herstellung eines gefrorenen essbaren Produkts nach Anspruch 17 oder 18, wobei die Gefriervorrichtung eine im Kontinueverfahren arbeitende Gefriervorrichtung ist.

25. System zur Herstellung eines gefrorenen essbaren Produkts nach Anspruch 24, wobei die im Kontinuesystem arbeitende Gefriervorrichtung einen Stößel und einen Variable-Frequenz-Umrichter zum Betreiben des Stößels bei einer gewählten Geschwindigkeit umfasst.

26. System zur Herstellung eines gefrorenen essbaren Produkts nach Anspruch 17 oder 18, wobei die weitere Herstellungsstation eine Füllvorrichtung ist.

27. System zur Herstellung eines gefrorenen essbaren Produkts nach Anspruch 17 oder 18, wobei die weitere Herstellungsstation ein Zutatenbeschicker ist.

28. System zur Herstellung eines gefrorenen essbaren Produkts nach Anspruch 17 oder 18, wobei die weitere Herstellungsstation ein Extrusionssystem ist.

29. System zur Herstellung eines gefrorenen essbaren Produkts nach Anspruch 17, wobei die mindestens eine Pumpe Folgendes umfasst: eine erste Pumpe zum Pumpen des ersten Teils der teilweise gefrorenen Emulsion zu der kontinuierlichen Mischvorrichtung; und eine zweite Pumpe zum gleichzeitigen Pumpen des zweiten Teils der teilweise gefrorenen Emulsion zu der weiteren Herstellungsstation.

30. System zur Herstellung eines gefrorenen essbaren Produkts nach Anspruch 17, des Weiteren umfassend ein Verteilventil zum Aufnehmen der teilweise gefrorenen Emulsion von der mindestens einen Pumpe und Verteilen des ersten Teils der teilweise gefrorenen Emulsion zu der kontinuierlichen Mischvorrichtung und des zweiten Teils der teilweise gefrorenen Emulsion zu der weiteren Herstellungsstation.

31. System zur Herstellung eines gefrorenen essbaren Produkts nach Anspruch 18, wobei die mindestens eine Pumpe Folgendes umfasst: eine erste Pumpe zum Pumpen des ersten Teils der teilweise gefrorenen Emulsion zu der Gefriervorrichtung; und eine zweite Pumpe zum Pumpen des zweiten Teils der teilweise gefrorenen Emulsion zu der weiteren Herstellungsstation.

32. System zur Herstellung eines gefrorenen essbaren Produkts nach Anspruch 18, des Weiteren umfassend ein Verteilventil zum Aufnehmen der teilweise gefrorenen Emulsion von der mindestens einen Pumpe und Verteilen des ersten Teils der teilweise gefrorenen Emulsion zu der Gefriervorrichtung und des zweiten Teils der teilweise gefrorenen Emulsion zu der weiteren Herstellungsstation.

## Revendications

1. Procédé de fabrication d'un produit comestible congelé sur un dispositif de fabrication comportant une pluralité de stations de fabrication, les stations de fabrication comprenant un mélangeur en continu (409) et un congélateur (411), le procédé comprenant les étapes consistant à : préparer un mélange d'ingrédients pour le produit, fournir une alimentation continue en air comprimé depuis une alimentation d'air (407), diriger en continu le mélange et l'air comprimé à travers un premier conduit (423) dans le mélangeur en continu (409), créer une émulsion du mélange et de l'air comprimé dans le mélangeur en continu (409), diriger l'émulsion depuis le mélangeur en continu (409) dans le congélateur (411), le mélangeur en continu (409) étant relié par un second conduit au congélateur, congeler partiellement l'émulsion dans le congélateur (411), et fournir au moins une pompe pour renvoyer en continu et en simultané à la fois une première partie de l'émulsion partiellement congelée du congélateur (411) dans le premier conduit (423), la première partie de l'émulsion partiellement congelée étant amenée à recirculer et se combinant avec le mélange et l'air comprimé dans le premier conduit (423), lequel est continuellement dirigé dans le mélangeur en continu (409), et une seconde partie de l'émulsion partiellement congelée à une station supplémentaire parmi les stations de fabrication.

2. Procédé de fabrication d'un produit comestible congelé sur un dispositif de fabrication comportant une pluralité de stations de fabrication, les stations de fabrication comprenant un mélangeur en continu (509) et un congélateur (511), le procédé comprenant les étapes consistant à : préparer un mélange d'ingrédients pour le produit, fournir une alimentation continue en air comprimé depuis une alimentation d'air (507), diriger en continu le mélange et l'air comprimé à travers un premier conduit (523) dans le mélangeur en continu (509), créer une émulsion du mélange et de l'air comprimé dans le mélangeur en continu (509), diriger l'émulsion depuis le mélangeur en continu dans le congélateur (511), le mélangeur en continu (509) étant relié par un second conduit (521) au congélateur, de congeler partiellement l'émulsion dans le congélateur (511), et fournir au moins une pompe pour renvoyer en continu et en simultané à la fois une première partie de l'émulsion partiellement congelée du congélateur dans le second conduit (521), la première partie de l'émulsion partiellement congelée du congélateur (511) et l'émulsion du mélangeur (509) étant mélangées pendant la transmission de ces composants dans le second conduit (521) et à travers le congélateur (511), et une seconde partie de l'émulsion partiellement congelée à une station supplémentaire parmi les stations de fabrication.

3. Procédé de fabrication d'un produit comestible congelé selon la revendication 1 ou 2, dans lequel le produit comestible congelé est un produit laitier congelé.

4. Procédé de fabrication d'un produit comestible congelé selon la revendication 3, dans lequel le produit laitier congelé est une crème glacée.

5. Procédé de fabrication d'un produit comestible congelé selon la revendication 4, dans lequel la crème glacée est une crème glacée à faible teneur en matière grasse.

6. Procédé de fabrication d'un produit comestible congelé selon la revendication 5, dans lequel la crème glacée à faible teneur en matière grasse comprend entre 5% et 10% de matière grasse laitière.

7. Procédé de fabrication d'un produit comestible congelé selon la revendication 6, dans lequel la crème glacée à faible teneur en matière grasse comprend entre 6% et 7% de matière grasse laitière.

8. Procédé de fabrication d'un produit comestible congelé selon la revendication 1 ou 2, dans lequel le congélateur est un congélateur à processus continu.

9. Procédé de fabrication d'un produit comestible congelé selon la revendication 8, dans lequel le congélateur à processus continu comprend une palette et un convertisseur de fréquence variable, et comprenant en outre l'entraînement de la palette à une vitesse sélectionnée en utilisant le convertisseur de fréquence variable.

10. Procédé de fabrication d'un produit comestible congelé selon la revendication 1 ou 2, dans lequel la station de fabrication supplémentaire est une machine à garnir.

11. Procédé de fabrication d'un produit comestible congelé selon la revendication 1 ou 2, dans lequel la station de fabrication supplémentaire est un dispositif d'alimentation en ingrédients.

12. Procédé de fabrication d'un produit comestible congelé selon la revendication 1 ou 2, dans lequel la station de fabrication supplémentaire est un système d'extrusion.

13. Procédé de fabrication d'un produit comestible congelé selon la revendication 1, comprenant en outre les étapes consistant à :
fournir une première pompe et une seconde pompe ; pomper à l'aide de la première pompe la première partie de l'émulsion partiellement congelée dans le mélangeur en continu, et pomper simultanément à l'aide de la seconde pompe la seconde partie de l'émulsion partiellement congelée dans la station de fabrication supplémentaire.

14. Procédé de fabrication d'un produit comestible congelé selon la revendication 1, comprenant en outre les étapes consistant à :
fournir une pompe et une vanne de dérivation, pomper à l'aide de la pompe l'émulsion partiellement congelée à travers la vanne de dérivation, dévier à l'aide de la vanne de dérivation la première partie de l'émulsion partiellement congelée vers le mélangeur en continu et la seconde partie de l'émulsion partiellement congelée vers la station de fabrication supplémentaire.

15. Procédé de fabrication d'un produit comestible congelé selon la revendication 2, comprenant en outre les étapes consistant à :
fournir une première pompe et une seconde pompe, pomper à l'aide de la première pompe la première partie de l'émulsion partiellement congelée dans le congélateur, et pomper à l'aide de la seconde pompe la seconde partie de l'émulsion partiellement congelée dans la station de fabrication supplémentaire.

16. Procédé de fabrication d'un produit comestible congelé selon la revendication 2, comprenant en outre les étapes consistant à :
fournir une pompe et une vanne de dérivation, pomper à l'aide de la pompe l'émulsion partiellement congelée à travers la vanne de dérivation, dévier à l'aide de la vanne de dérivation la première partie de l'émulsion partiellement congelée dans le congélateur et la seconde partie de l'émulsion partiellement congelée dans la station de fabrication supplémentaire.

17. Dispositif de fabrication d'un produit comestible congelé comprenant : un mélangeur en continu (409) pour recevoir un mélange d'ingrédients pour le produit et de l'air comprimé en provenance d'une source (401, 403) via un premier conduit (423) pour le mélange et une source (407) pour l'air comprimé, et pour créer une émulsion du mélange et de l'air comprimé, un congélateur (411) pour congeler partiellement l'émulsion, le mélangeur en continu (409) étant relié par un second conduit au congélateur (411), et au moins une pompe (419) pour pomper en continu et en simultané à la fois une première partie de l'émulsion partiellement congelée depuis le congélateur (411) en retour dans le premier conduit (423), la première partie étant combinée avec le mélange et l'air comprimé qui est continuellement reçu à l'intérieur du mélangeur en continu pour développer un mélange de plus en plus uniforme, et une seconde partie de l'émulsion partiellement congelée dans une station de fabrication supplémentaire du dispositif.

18. Dispositif de fabrication d'un produit comestible congelé comprenant : un mélangeur en continu (509) pour recevoir un mélange d'ingrédients pour le produit et de l'air comprimé en provenance d'une source (501, 503) via un premier conduit (523) pour le mélange et une source (507) pour l'air comprimé, et pour créer une émulsion du mélange et de l'air comprimé, un congélateur (511) pour congeler partiellement l'émulsion, le mélangeur en continu (509) étant relié par un second conduit (521) au congélateur (511), et au moins une pompe (519) pour pomper en simultané et en continu à la fois une première partie de l'émulsion partiellement congelée en retour dans le second conduit (521), la première partie de l'émulsion partiellement congelée du congélateur (511) et l'émulsion du mélangeur (509) se mélangeant pendant la transmission de ces composants dans le congélateur (511) et à travers celui-ci, et une seconde partie de l'émulsion partiellement congelée dans une station de fabrication supplémentaire du dispositif.

19. Dispositif de fabrication d'un produit comestible congelé selon la revendication 17 ou 18, dans lequel le produit comestible congelé est un produit laitier congelé.

20. Dispositif de fabrication d'un produit comestible congelé selon la revendication 19, dans lequel le produit laitier congelé est une crème glacée.

21. Dispositif de fabrication d'un produit comestible congelé selon la revendication 20, dans lequel la crème glacée est une crème glacée à faible teneur en matière grasse.

22. Dispositif de fabrication d'un produit comestible congelé selon la revendication 21, dans lequel la crème glacée à faible teneur en matière grasse comprend entre 5% et 10% de matière grasse laitière.

23. Dispositif de fabrication d'un produit comestible congelé selon la revendication 22, dans lequel la crème glacée à faible teneur en matière grasse comprend entre 6% et 7% de matière grasse laitière.

24. Dispositif de fabrication d'un produit comestible congelé selon la revendication 17 ou 18, dans lequel le congélateur est un congélateur à processus continu.

25. Dispositif de fabrication d'un produit comestible congelé selon la revendication 24, dans lequel le congélateur à processus continu comprend une palette et un convertisseur de fréquence variable pour entraîner la palette à une vitesse sélectionnée.

26. Dispositif de fabrication d'un produit comestible congelé selon la revendication 17 ou 18, dans lequel la station de fabrication supplémentaire est une machine à garnir.

27. Dispositif de fabrication d'un produit comestible congelé selon la revendication 17 ou 18, dans lequel la station de fabrication supplémentaire est un dispositif d'alimentation en ingrédients.

28. Dispositif de fabrication d'un produit comestible congelé selon la revendication 17 ou 18, dans lequel la station de fabrication supplémentaire est un système d'extrusion.

29. Dispositif de fabrication d'un produit comestible congelé selon la revendication 17, dans lequel la au moins une pompe comprend : une première pompe pour pomper la première partie de l'émulsion partiellement congelée dans le mélangeur en continu, et une seconde pompe pour pomper simultanément la seconde partie de l'émulsion partiellement congelée dans la station de fabrication supplémentaire.

30. Dispositif de fabrication d'un produit comestible congelé selon la revendication 17, comprenant en outre une vanne de dérivation pour recevoir l'émulsion partiellement congelée en provenance de la au moins une pompe et dévier la première partie de l'émulsion partiellement congelée dans le mélangeur en continu et la seconde partie de l'émulsion partiellement congelée dans la station de fabrication supplémentaire.

31. Dispositif de fabrication d'un produit comestible congelé selon la revendication 18, dans lequel la au moins une pompe comprend : une première pompe pour pomper la première partie de l'émulsion partiellement congelée dans le congélateur, et une seconde pompe pour pomper la seconde partie de l'émulsion partiellement congelée dans la station de fabrication supplémentaire.

32. Dispositif de fabrication d'un produit comestible congelé selon la revendication 18, comprenant en outre une vanne de dérivation pour recevoir l'émulsion partiellement congelée en provenance de la au moins une pompe et dévier la première partie de l'émulsion partiellement congelée dans le congélateur et la seconde partie de l'émulsion partiellement congelée dans la station de fabrication supplémentaire.
